# EUROPEAN PATENT SPECIFICATION

(11) **EP 3 972 230 B1**
(45) Date of publication and mention of the grant of the patent: **23.04.2025**
(21) Application number: 20818990.2
(22) Date of filing: 03.06.2020
(51) Int. Cl.: H04M 1/02, H02N 2/02, H04N 23/51, H04N 23/54, G02B 7/10, G02B 27/64, H04N 23/55, H04N 23/57

(54) **CAMERA MODULE, VIDEO CAMERA, AND MOBILE TERMINAL**
KAMERAMODUL, VIDEOKAMERA UND MOBILES ENDGERÄT
MODULE DE CAMÉRA, CAMÉRA VIDÉO ET TERMINAL MOBILE

(30) Priority: 06.06.2019 CN 201910491991
(43) Date of publication of application: 23.03.2022
(73) Proprietor: Huawei Technologies Co., Ltd., Longgang District Shenzhen, Guangdong 518129 (CN)
(72) Inventor: ZHEN, Feng, Shenzhen, Guangdong 518129 (CN); KUO, Li-Te, Shenzhen, Guangdong 518129 (CN); YANG, Chuan, Shenzhen, Guangdong 518129 (CN); DING, Ruiming, Shenzhen, Guangdong 518129 (CN); XIE, Jun, Shenzhen, Guangdong 518129 (CN)
(74) Representative: Isarpatent
(86) International application number: PCT/CN2020/094089
(87) International publication number: WO 2020/244535

(56) References cited:
- WO-A2-2010/058985
- CN-A- 101 896 719
- CN-A- 102 037 241
- CN-A- 109 302 556
- JP-A- 2002 130 114
- US-A1- 2011 261 253
- US-A1- 2014 009 675
- US-A1- 2016 202 494
- US-A1- 2017 108 705

## Description

### TECHNICAL FIELD

This application relates to the field of communication technologies, and specifically, to a camera module, a camera, and a mobile terminal.

### BACKGROUND

In an existing intelligent device, a camera module basically implements auto focus, zoom, and image stabilization by driving movement of a camera lens by using a motor mechanism. However, a motor carrier needs to drive the camera lens to move for a specific distance. Therefore, a space needs to be reserved for the movement of the camera lens in the intelligent device. A smartphone is used as an example. As the smartphone is increasingly thinner, an available space that can be left for a camera module in the smartphone becomes increasingly smaller. However, a motor carrier needs to use a magnet to drive a coil to generate thrust, so as to drive a camera lens to move longitudinally. In this case, the magnet occupies a relatively large volume inside a motor, and to make the thrust reach a specific value, it is difficult to further reduce a volume of the magnet. Therefore, a structure of the motor needs to be improved and a volume of the motor needs to be reduced without reducing the volume of the magnet, so as to reduce a volume of the camera module in the mobile phone.

After a shape memory alloy (shape memory alloy, SMA) is heated, deformation occurring at a relatively low temperature can be eliminated, and an original shape of the shape memory alloy before deformation can be restored. Therefore, the movement of the camera lens may be driven by using a motor driven by an SMA wire. Compared with a conventional motor, the SMA wire has a smaller volume, and can effectively reduce an overall size of a module, thereby facilitating miniaturization development of the module. However, because a motor circuit board is generally disposed inside the motor, and the motor is generally located above an image sensor, the motor circuit board is very close to the image sensor. After being driven by a pulse width modulation (pulse width modulation, PWM) driving signal, the SMA wire produces electromagnetic interference to the image sensor, and stripe noise occurs on a captured photo. Therefore, it is urgent to design a camera module that can reduce the stripe noise.

US 2016/202494 A1 discloses a camera actuator having autofocusing and image stabilization functions which includes a fixing part mounted on a portable terminal, a first coil mounted on the fixed part; a first carrier installed to be movable in the direction parallel with the lens within the fixing part; a magnet mounted on the first carrier in such a manner that the outside surface of the magnet faces the first coil; a second carrier installed to be movable in the direction of an optical axis of the lens within the first carrier and moving along with the first carrier; a second coil mounted on the second carrier, disposed within the magnet and generating a second driving force to the second carrier; a lens part including at least one lens, mounted on the second carrier, and moving along with the second carrier; and a hall sensor sensing the position of the list carrier.

US 2017/108705 A1 discloses a method and a camera including a stabilizer.

US 2014/009675 A1 discloses an actuator which includes a base, a stationary frame fixed on the base, a movable frame received in the stationary frame, a SMA line, a guide pole, a position sensor, and a controller.

WO 2010/058985 A2 discloses a miniature camera driving apparatus using a piezoelectric element.

### SUMMARY

This application provides a camera module, a camera, and a mobile terminal, as defined in the appended set of claims, so that electromagnetic interference can be reduced, and stripe noise can be reduced.

It can be learned from this application that, the motor circuit board is disposed at a position far away from the image sensor. Specifically, the motor circuit board is located on the object side of the camera lens assembly, to increase a physical distance between the motor circuit board and the image sensor, thereby greatly reducing stripe noise.

According to the technical solutions of this application, the motor circuit board is disposed at a position far away from the image sensor. Specifically, the motor circuit board is located on the object side of the camera lens assembly, so that electromagnetic interference can be reduced, and stripe noise can be reduced.

### BRIEF DESCRIPTION OF DRAWINGS

FIG. 1 is a first schematic diagram of a structure of a camera module according to an embodiment of this application;
FIG. 2 is a second schematic diagram of a structure of a camera module according to an embodiment of this application;
FIG. 3 is a schematic diagram of a camera lens assembly according to an embodiment of this application;
FIG. 4 is a schematic diagram of a first fastening manner of a motor circuit board according to an embodiment of this application;
FIG. 5 is a schematic diagram of a second fastening manner of a motor circuit board according to an embodiment of this application;
FIG. 6 is a schematic diagram of a third fastening manner of a motor circuit board according to an embodiment of this application;
FIG. 7 is a schematic diagram of a fourth fastening manner of a motor circuit board according to an embodiment of this application;
FIG. 8 is a schematic diagram of a fifth fastening manner of a motor circuit board according to an embodiment of this application;
FIG. 9 is a schematic diagram of a sixth fastening manner of a motor circuit board according to an embodiment of this application;
FIG. 10 is a schematic diagram of a structure of a motor according to an embodiment of this application;
FIG. 11 is a first schematic diagram of a structure of a fastener of a motor according to an embodiment of this application;
FIG. 12 is a second schematic diagram of a structure of a fastener of a motor according to an embodiment of this application;
FIG. 13 is a schematic diagram of a connection manner between a motor and a motor circuit board according to an embodiment of this application;
FIG. 14 is a schematic diagram of another connection manner between a motor and a motor circuit board according to an embodiment of this application; and
FIG. 15 is a schematic diagram of another connection manner between a motor and a motor circuit board according to an embodiment of this application.

### DESCRIPTION OF EMBODIMENTS

Embodiments of this application provide a camera module, to avoid an electromagnetic interference problem caused by a close distance from a shape memory alloy (shape memory alloy, SMA) motor and wiring thereof to an image sensor and an analog power supply after the motor is driven by a pulse width modulation (pulse width modulation, PWM) driving signal. The embodiments of this application further provide a corresponding camera and a terminal device. Details are described in the following.

For a better understanding of this application, aspects of this application are described in more detail with reference to the accompanying drawings. It should be understood that, these detailed descriptions are merely descriptions of examples of implementations in this application, and are not intended to limit the scope of this application in any manner. In the full text of this specification, the same reference numerals refer to the same elements. The expression "and/or" includes any and all combinations of one or more of the associated listed items.

In descriptions of this application, it should be understood that a direction or a position relationship indicated by terms such as "length", "width", "upper", "lower", "front", "back", "left", "right", "vertical", "horizontal", "top", "bottom", "inside", or "outside" is a direction or a position relationship shown based on the accompanying drawings, is merely used to facilitate descriptions of this application and simplify the descriptions, but is not intended to indicate or imply that an indicated apparatus or element needs to have a particular direction, and needs to be constructed and operated in a particular direction, and therefore cannot be construed as a limitation on this application.

In addition, it should be noted that, in this specification, the expressions such as "first" and "second" are merely used to distinguish one feature from another, and do not represent any limitation to the feature. Therefore, a first subject discussed below may also be referred to as a second subject without departing from the teachings of this application.

In this application, unless otherwise specified and limited, the terms such as "mount", "link", "connect", "fasten", and "dispose" should be understood broadly. For example, the term "connect" may be a fixed connection, may be a detachable connection, or may be integration; may be a mechanical connection or may be an electrical connection; or may be a direct connection, may be an indirect connection implemented by using an intermediate medium, or may be communication inside two elements or an interaction relationship between two elements. A person of ordinary skill in the art may interpret specific meanings of the foregoing terms in this application according to specific cases.

In the accompanying drawings, for ease of description, a thickness, a size, and a shape of an object are slightly exaggerated. The accompanying drawings are merely examples and are not drawn strictly to scale.

It should be further understood that, the terms "include", "comprise", "have", "contain", and/or "involve" are used in this specification to indicate that the stated features, entirety, steps, operations, elements and/or components are present, but this does not exclude existence of or additional one or more other features, entirety, steps, operations, elements, and/or combinations thereof. In addition, when the implementations of this application are described, "may" is used to indicate "one or more implementations of this application". Moreover, the term "for example" is intended to refer to an example or illustration.

Unless otherwise limited, all terms (including technical and scientific terms) used in this specification have same meanings as understood usually by a person of ordinary skill in the art to which this application belongs. It should be further understood that, terms (such as those defined in common dictionaries) should be interpreted as having meanings consistent with their meanings in the context of related technologies, and will not be interpreted in an idealized or excessive formal sense, unless expressly defined herein.

It should be noted that the embodiments in this application and the features in the embodiments may be mutually combined in the case of no conflict. This application is described below in detail with reference to accompanying drawings and the embodiments.

Currently, in a photographing process of a mobile phone, a captured picture sometimes becomes blurred, that is, the captured picture is not clear enough, and even a ghost or blur case occurs. In addition to occasional out of focus (that is, a camera fails to focus normally), these problems are largely caused by a small jitter during scene shooting and exposure. Generally, this slight jitter often occurs in a handheld condition, resulting in camera lens deviation of a photographing device and quality deterioration of an image captured by an image sensor. Therefore, in recent years, there is a relatively large demand for developing an image stabilization technology. In this background, proposals on an optical image stabilization (optical image stabilization, OIS) function are also increased. The optical image stabilization function may control the camera lens to move relative to the image sensor to offset and compensate for image offset caused by hand shaking. Generally, an actuating device of an OIS motor includes a voice coil motor (voice coil motor, VCM) or a shape memory alloy (shape memory alloy, SMA). However, the voice coil motor does not have enough power to push a relatively large and heavy camera lens due to limitation of a size of a mobile phone. In addition, smartphone manufacturers are moving towards a direction of using two or more cameras to enhance image functions, for example, a depth of field function (Bokeh), Zoom application, and 3D imaging. However, because the voice coil motor has a magnet, there is magnetic interference between two voice coil motors, the voice coil motors cannot be too close, and therefore a design size of the mobile phone is affected. Therefore, advantages of the SMA technology are brought into play. Currently, the SMA technology is applied to the smartphone camera industry, for example, is applied to SMA AF (auto focus) and SMA OIS (optical image stabilization). A principle of the SMA technology is as follows: An SMA wire is heated by an electric current to transform from a martensite state to an austenite state, and is returned from the austenite state to the martensite state through natural cooling. In terms of saving drive power consumption and conveniently detecting a resistance of the SMA wire, a motor driven by the SMA technology (SMA motor for short hereinafter) is best driven by a pulse width modulation (pulse width modulation, PWM) signal. When the SMA motor and wiring thereof are close to the image sensor and an analog power supply, electromagnetic radiation of the PWM signal causes stripe interference to photographing, and therefore, stripe noise occurs on an image. It is difficult to filter out this kind of stripe noise in later image processing. Therefore, a PWM stripe noise problem of the SMA motor has always been a key problem that restricts and limits large-scale commercial use of the SMA motor.

To resolve the foregoing technical problem, this application provides a camera module, to resolve a stripe noise problem caused by electromagnetic interference in photographing.

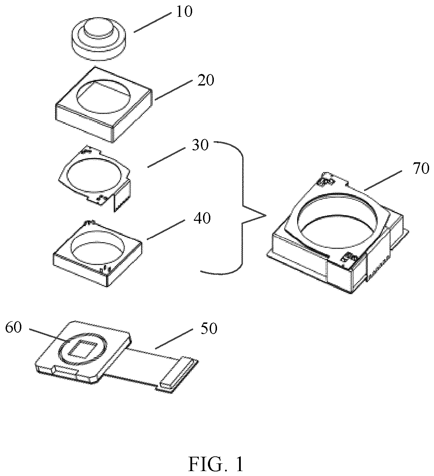

FIG. 1 is a schematic diagram of a structure of a camera module according to an embodiment of this application.

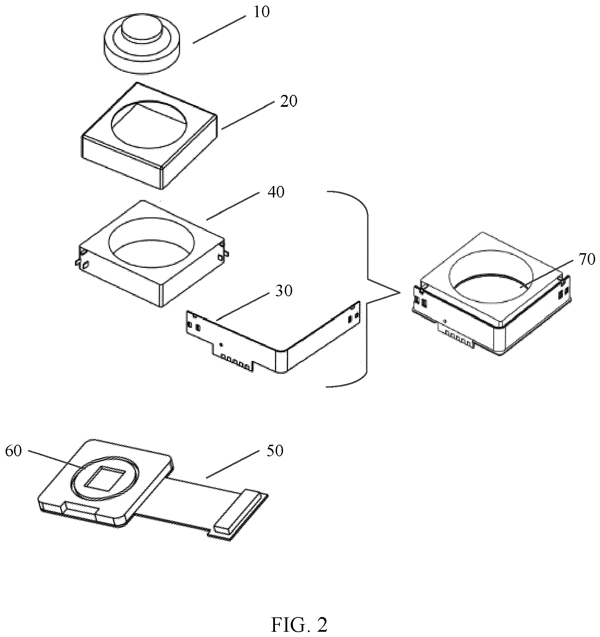

Referring to FIG. 1, the camera module provided in this embodiment of this application includes a camera lens 10, a motor circuit board 30, a motor 40, and an image sensor 60. The camera lens 10 and the motor 40 may be considered as a camera lens assembly, and the motor circuit board 30 and the image sensor 60 are not located on a same side of the camera lens assembly. Specifically, as shown in FIG. 1, the motor circuit board 30 and the camera lens assembly each have a light passing hole, the camera lens assembly is located between the image sensor 60 and the motor circuit board 30, a light-sensitive surface of the image sensor 60 is located on an image side of the camera lens assembly, and the motor circuit board 30 is located on an object side of the camera lens assembly. Alternatively, as shown in FIG. 2, the motor circuit board 30 may be located on a side of the camera lens assembly, and the image sensor 60 may be located below the camera lens assembly.

In a specific implementation, the camera lens 10 may include a plurality of lenses (concave and convex lenses), that is, imaging is implemented by combining the plurality of camera lenses. The motor 40 may drive the camera lens 10 to perform zoom motion, auto focus motion, or optical image stabilization motion. Specifically, the motor 40 may include an auto focus (auto focus, AF) motor or an optical image stabilization (optical image stabilization, OIS) motor. The AF motor is configured to adjust a camera lens position to photograph objects at different distances, and the OIS motor is configured to adjust a camera lens position, so that an image of a photographed object is not blurred due to, for example, hand shaking of a user. In other words, the camera lens assembly mentioned in this embodiment of this application may have one or more functions of an auto focus function, an automatic zoom function, and an optical image stabilization function.

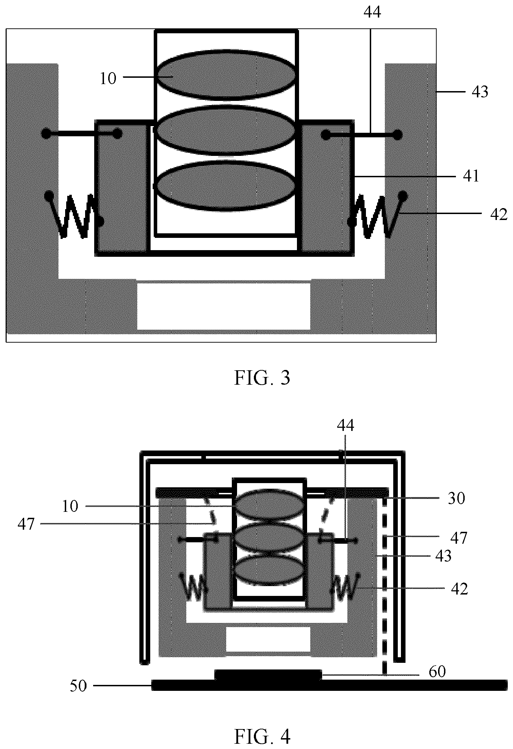

FIG. 3 is a schematic diagram of a structure of the camera lens assembly according to this embodiment of this application. The camera lens assembly includes the motor 40 and the camera lens 10. Three camera lenses shown in FIG. 3 do not represent a limitation to a quantity. The motor 40 includes a fastener 43, a movable part 41, a camera lens support 42, and an actuator 44. One end of the camera lens support 42 is fastened to the fastener 43, and the other end thereof is configured to support the movable part 41; a light passing hole is provided on the movable part 41, and the movable part 41 is configured to mount the camera lens 10; and one end of the actuator 44 is connected to the fastener 43, the other end of the actuator 44 is connected to the movable part 41, and the actuator 44 drives the movable part 41 when the actuator 44 is driven by a signal.

As described in FIG. 1, the motor circuit board 30 and the image sensor 60 are not located on the same side of the camera lens assembly. Specifically, the motor circuit board 30 may be located above the camera lens assembly and the image sensor 60 may be located below the camera lens assembly, or the motor circuit board 30 may be located on the side of the camera lens assembly and the image sensor 60 may be located below the camera lens assembly. When the motor circuit board 30 is located above the camera lens assembly, the motor circuit board 30 may be fastened above the camera lens assembly in different manners. Alternatively, when the motor circuit board 30 is located on the side of the camera lens assembly, the motor circuit board 30 may be fastened to the side of the camera lens assembly in different manners.

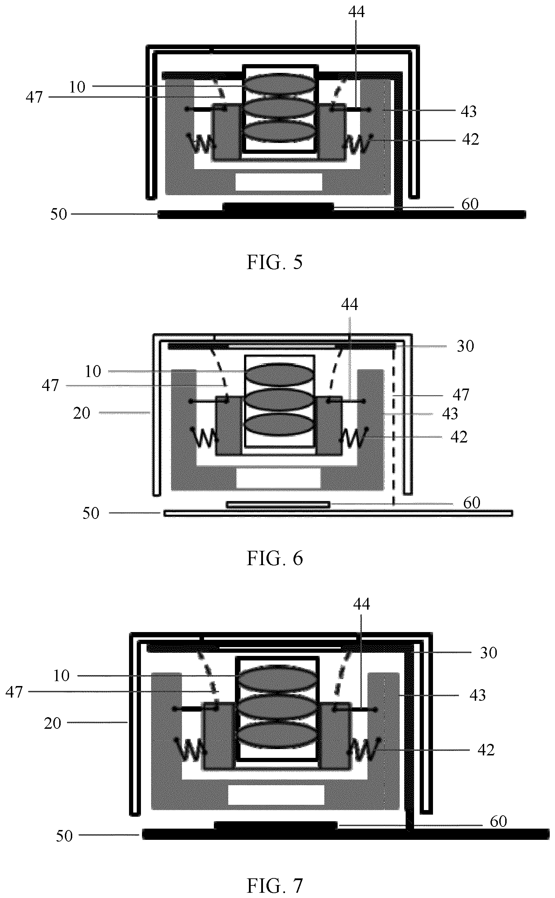

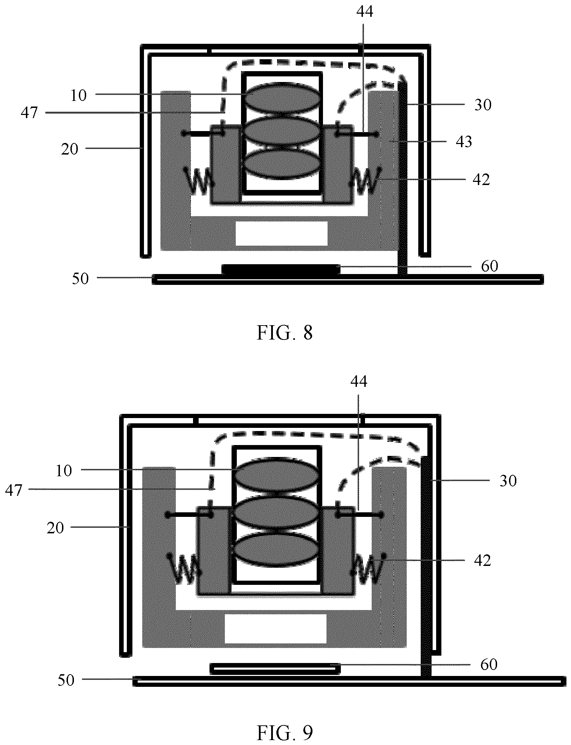

FIG. 4 to FIG. 7 show several fastening manners when the motor circuit board 30 is located above the camera lens assembly according to this embodiment of this application. FIG. 8 and FIG. 9 show several fastening manners when the motor circuit board 30 is located on the side of the camera lens assembly according to this embodiment of this application. As shown in FIG. 4, when the motor circuit board 30 is located above the camera lens assembly, the motor circuit board 30 may be fastened onto the fastener 43, and the motor circuit board 30 may be electrically connected to the movable part 41 and a circuit board 50 by using a lead 47. It should be noted that, a specific quantity of leads is not limited in this application. In another implementation, as shown in FIG. 5, the motor circuit board 30 may be of a bendable structure, so that the motor circuit board 30 can be directly electrically connected to the circuit board 50, and the motor circuit board 30 does not need to be electrically connected to the circuit board 50 by using the lead 47. In another possible implementation, the motor circuit board 30 may also be fastened to a housing.

As shown in FIG. 6 and FIG. 7, the camera module provided in this application may further include a housing 20. The motor circuit board 30 is disposed in the housing 20. In a specific implementation, the motor circuit board 30 may be further fastened to an upper surface of the housing 20. For example, the motor circuit board 30 is fixedly connected to the upper surface of the housing 20 in a welded manner. The welding may be laser welding or another welding manner. This is not limited in this embodiment of this application. Alternatively, the motor circuit board 30 may be detachably connected to the upper surface of the housing 20 by using, for example, a connector such as a screw or a bolt, or may be movably connected to the upper surface of the housing 20 by using, for example, a hinge, or the motor circuit board 30 may be bonded to the upper surface of the housing 20. The bonding may be bonding by using glue or bonding by using another material. This is not limited in this embodiment of this application. The motor circuit board 30 may be electrically connected to the actuator 44 and the circuit board 50 by using the lead 47. It should be noted that, a specific quantity of leads is not limited in this application. In another implementation, as shown in FIG. 7, the motor circuit board 30 may be of a bendable structure, so that the motor circuit board 30 can be directly electrically connected to the circuit board 50, and the motor circuit board 30 does not need to be electrically connected to the circuit board 50 by using the lead 47.

FIG. 8 and FIG. 9 show two fastening manners when the motor circuit board 30 is located on the side of the camera lens assembly according to this embodiment of this application. When the motor circuit board 30 is located on the side of the camera lens assembly, the motor circuit board 30 may be fastened to the fastener 43 of the motor, and the motor circuit board may be electrically connected to the actuator 44 and the circuit board 50 by using the lead 47. In a specific implementation, as shown in FIG. 9, the motor circuit board 30 may be further fastened to a side surface of the housing 20, and the motor circuit board 30 may be electrically connected to the actuator 44 and the circuit board 50 by using the lead 47.

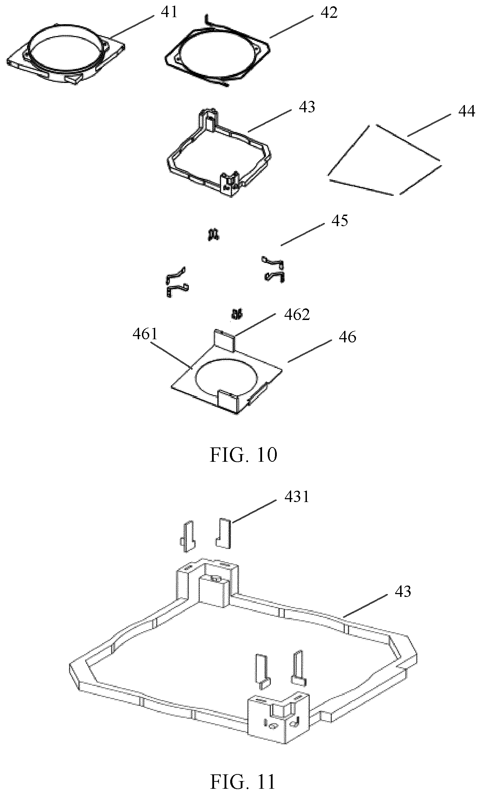

In the structures described in FIG. 4 and FIG. 5, the motor circuit board 30 may be fastened to the fastener 43 of the motor. The following further describes a structure of the fastener 43. The motor 40 may further include a support structure. It should be noted that, the support structure may be a part of the fastener 43. In other words, the support structure and the fastener 43 may be integrated into one. When the fastener 43 includes a base, a raised structure may be disposed along an edge of the base as the support structure. The raised structure may be configured to support the motor circuit board 30, to fix a position of the motor circuit board 30. Alternatively, the support structure may be a separate mechanism. For example, as shown in FIG. 10, an SMA motor is used as an example for description. Specifically, a support structure 46 may include a base 461 and a positioning component 462. The base 461 has a light passing hole, the base 461is located on the image side of the camera lens assembly, one end of the positioning component 462 is fastened to the base 461, and the other end thereof is fastened to the motor circuit board 30. There is an accommodating space between the motor circuit board 30 and the motor 40, and the accommodating space is used to accommodate an electronic device on the motor circuit board 30. In a specific implementation, when the motor circuit board 30 is located on a side of the motor 40, the support structure is configured to fasten the motor circuit board 30 on the side of the motor 40. In this scenario, the fastener 43 includes a base and a baffle, the base has a light passing hole, the base is located on the image side of the camera lens assembly, one end of the baffle is connected to the base, the other end thereof is far away from the base, and a surface between two ends of the baffle is fastened to the motor circuit board. 70 in FIG. 1 or FIG. 2 is a schematic diagram of a combination of the motor circuit board 30, the motor 40, and the support structure.

A specific shape of the support structure is not limited in this embodiment of this application. In an actual application process, a structure of the support structure may be set based on an actual requirement, and the support structure is mainly configured to fix the position of the motor circuit board 30. Specifically, the support structure is configured to fasten the motor circuit board 30 above or on the side of the motor 40.

It should be noted that, when the motor circuit board 30 is a flexible circuit board, to prevent a shape of the motor circuit board 30 from being easily changed, a fastening plate may be further added. The fastening plate has a light passing hole, and the fastening plate may be also referred to as a reinforcing plate. The reinforcing plate is fitted with the motor circuit board, so that the motor circuit board 30 is kept in a fixed shape. The reinforcing plate may further be a shielding plate. It should be further noted that, a fixed connection manner between the motor circuit board 30 and the support structure is not limited. For example, the motor circuit board 30 may be fixedly connected to the support structure in a welded manner. The welding may be laser welding or another welding manner. This is not limited in this embodiment of this application. Alternatively, the motor circuit board 30 may be detachably connected to the support structure by using, for example, a connector such as a screw or a bolt, or may be movably connected to the support structure by using, for example, a hinge, or the motor circuit board 30 may be bonded to the support structure. The bonding may be bonding by using glue or bonding by using another material. This is not limited in this embodiment of this application.

The actuator of the motor 40 may include a shape memory alloy (shape memory alloy, SMA) drive 44 When the motor is an motor driven by the SMA, the motor driven by the SMA includes a movable part 41, a fastener 43, a camera lens support 42, and an SMA wire 44, where one end of the camera lens support 42 is fastened to the fastener 43, and the other end thereof is configured to support the movable part 41; a light passing hole is provided on the movable part 41, and the movable part 41 is configured to mount the camera lens 10; one end of the SMA wire 44 is connected to the fastener 43, and the other end of the SMA wire 44 is connected to the movable part 41; the fastener 43 includes a base and a positioning component, the base has a light passing hole, the base is located on the image side of the camera lens assembly, one end of the positioning component is fastened to the base, and the other end thereof is fastened to the motor circuit board 30; and there is an accommodating space between the motor circuit board 30 and the motor, and the accommodating space is used to accommodate an electronic device on the motor circuit board 30.

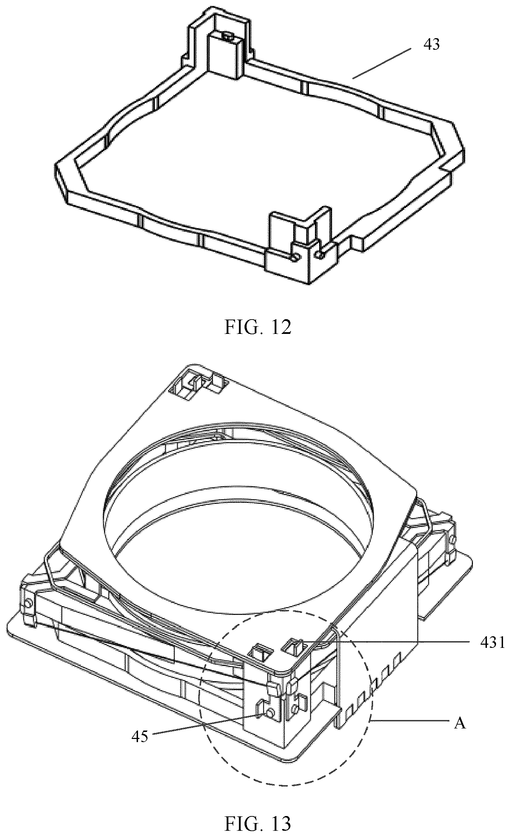

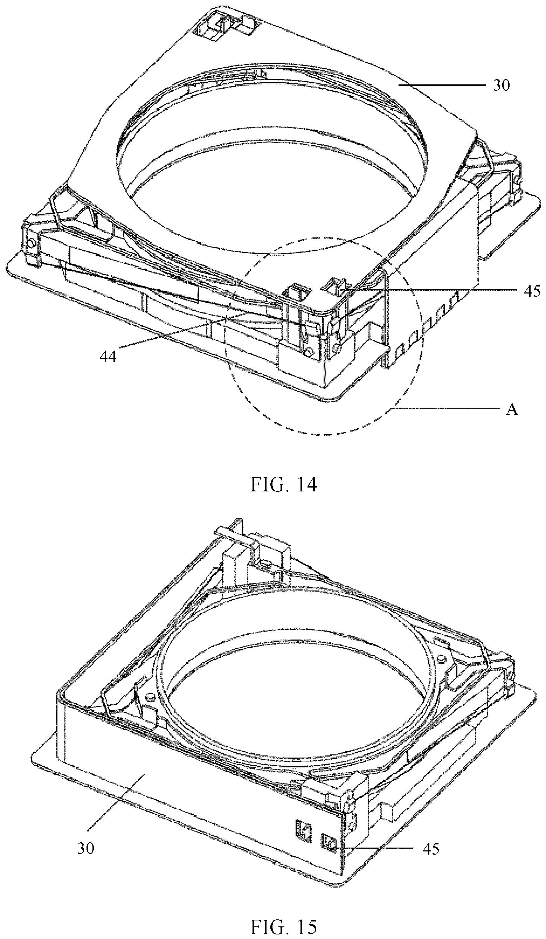

Specifically, the actuator 44 may be connected to the fastener 43 in a welded manner, or the actuator 44 may be connected to the fastener 43 in a bolted manner, or the actuator 44 may be connected to the fastener 43 by using clamping jaws 45. For example, the SMA motor is used as an example, and an example in which the actuator 44 is connected to the fastener 43 by using the clamping jaws 45 is used for specific description. Specifically, FIG. 11 and FIG. 12 are respectively schematic diagrams of structures of the fastener 43 of the motor. As shown in FIG. 11, the fastener 43 of the motor includes conductive pins 431. Specifically, the motor circuit board 30 is electrically connected to the conductive pins 431 of the fastener 43 of the motor. A manner in which the motor circuit board 30 is electrically connected to the conductive pins 431 of the fastener 43 of the motor may include: The motor circuit board 30 is electrically connected to the conductive pins 431 in a welded manner, or the motor circuit board 30 is electrically connected to the conductive pins 431 by using conductive adhesive. FIG. 13 is a schematic diagram of a connection between the fastener 43 of the motor and the motor circuit board 30 when the motor circuit board 30 is above the motor. As shown in A of FIG. 13, the clamping jaws 45 are connected to the actuator 44, and the clamping jaws 45 are electrically connected to the conductive pins 431 of the fastener 43 of the motor. Alternatively, FIG. 12 is another schematic diagram of a structure of the fastener 43 of the motor. In the structure shown in FIG. 12, the fastener 43 of the motor may not include the conductive pins 431 shown in FIG. 11. In this case, the actuator 44 and the motor circuit board 30 are no longer connected by using the fastener 43 of the motor. Specifically, as shown in A of FIG. 14, when the motor circuit board 30 is above the motor 40, the motor circuit board 30 is directly electrically connected to the clamping jaws 45, and the clamping jaws 45 are connected to the actuator 44. When the motor circuit board 30 is on the side surface of the motor 40, FIG. 15 is a schematic diagram of a structure when the motor circuit board 30 is on the side of the motor. For a connection manner between the motor circuit board 30 and the motor 40, refer to the descriptions when the motor circuit board 30 is above the motor 41. Details are not described herein again.

The motor circuit board 30 is connected to the camera lens assembly by using a signal, the motor circuit board 30 has an end part that extends out of the housing 20, and the motor circuit board 30 is connected to the circuit board 50 by using a signal and by using the end part. The circuit board 50 may be a printed circuit board (printed circuit board, PCB) or a flexible printed circuit (flexible printed circuit, FPC), or may be another type of circuit board. This is not limited in this embodiment. In this embodiment of this application, the "signal connection" and the "electrical connection" are often used alternately. A person skilled in the art should understand that, when a difference between the "signal connection" and the "electrical connection" is not specifically emphasized, the "signal connection" and the "electrical connection" indicate a same meaning.

After being energized by the circuit board 50, the motor circuit board 30 transmits a pulse width modulation (pulse width modulation, PWM) signal to the camera lens assembly, where electromagnetic interference intensity of the PWM signal to the image sensor 60 is negatively correlated with a distance between the motor circuit board 30 and the image sensor 60. A image sensor chip may be mounted on the circuit board 50, the image sensor chip may be also referred to as the image sensor 60, and the image sensor 60 is electrically connected to the circuit board 50. It should be noted that, a position of the image sensor may be further fixed by using an epoxy injection encapsulation process. Specifically, molten epoxy may be injected into a mold by using a high-temperature injection-molding technology. Therefore, the image sensor 60 may be wrapped up. Therefore, a plastic packaging module is formed, and the position of the image sensor is fixed. A welded end of the image sensor in the plastic packaging module is exposed on an active surface of the plastic packaging module.

In this embodiment of this application, the motor circuit board 30 is electrically connected to the circuit board 50, and the motor circuit board 30 is on a side far away from the image sensor 60. In this way, a physical distance between the PWM signal of the motor circuit board 30 and the image sensor 60 is increased, thereby reducing PWM stripe noise.

An embodiment of this application further provides a camera, including the camera module provided in the foregoing embodiment. The camera includes a camera body, a main board, a first mounting part, and a camera module. The first mounting part is disposed on the camera body, and is configured to detachably assemble the camera module. The camera module is electrically connected to the main board, and the camera module is the camera module described in the foregoing content.

An embodiment of this application further provides a mobile terminal, including the camera module provided in the foregoing embodiment. The mobile terminal includes a housing, a main board, and a camera module. The main board is disposed in the housing, a camera of the camera module is disposed at a camera hole of the housing, and the camera module is electrically connected to the main board. The camera module is the camera module described in the foregoing content. It should be understood that, in this embodiment of this application, the mobile terminal may be referred to as user equipment (user equipment, UE), a mobile station (mobile station, MS), a terminal (terminal), or the like. The mobile terminal may communicate with one or more core networks by using a radio access network (radio access network, "RAN" for short). The mobile terminal may be a mobile phone (or referred to as a "cellular" phone, or the like), a computer with a mobile terminal, or the like. The terminal may alternatively be a portable, pocket-sized, handheld, computer built-in, or in-vehicle mobile apparatus. This is not limited in this application.

The camera module provided in the embodiments of this application is described in detail above. The principles and implementations of this application are described in this specification by using specific examples. The description about the embodiments is merely provided to help understand the method and core ideas of this application. In addition, a person of ordinary skill in the art can make changes in the specific implementations and application scopes based on the ideas of this application. In conclusion, the content of this specification shall not be construed as a limitation on this application.

## Claims

1. A camera module for motors driven by a shape memory alloy, SMA, technology, comprising:
a camera lens assembly, a motor circuit board (30), and an image sensor (60), wherein the motor circuit board (30) and the camera lens assembly each have a light passing hole, the camera lens assembly is located between the image sensor (60) and the motor circuit board (30), a light-sensitive surface of the image sensor (60) is located on an image side of the camera lens assembly, and the motor circuit board (30) is located on an object side of the camera lens assembly.

2. The camera module according to claim 1, wherein the camera lens assembly comprises a camera lens (10) and a motor (40), and the motor (40) comprises a movable part (41), a fastener (43), a camera lens support (42), and an actuator (44); one end of the camera lens support (10) is fastened to the fastener (43), and the other end thereof is configured to support the movable part (41); a light passing hole is provided on the movable part (41), and the movable part (41) is configured to mount the camera lens (10); one end of the actuator (44) is connected to the fastener (43), the other end of the actuator (44) is connected to the movable part (41), and the actuator (44) drives the movable part (41) when being driven by a signal; and the fastener (43) comprises a base (461) and a positioning component (462), the base (461) has a light passing hole, the base (461) is located on the image side of the camera lens assembly, one end of the positioning component (462) is fastened to the base (461), and the other end thereof is fastened to the motor circuit board.

3. The camera module according to claim 1, wherein the camera module further comprises a housing (20), and the camera lens assembly comprises a camera lens (10) and a motor (40), wherein a light passing hole is provided on a surface that is of the housing (20) and that corresponds to the camera lens (10); one end of a camera lens support (42) is fastened to a fastener (43), and the other end thereof is configured to support a movable part (41); a light passing hole is provided on the movable part (41), and the movable part (41) is configured to mount the camera lens (10); one end of an actuator (44) is connected to the fastener (43), and the other end of the actuator (44) drives the movable part when the actuator (44) is driven by a signal; and the motor circuit board is located on a side that is of the housing (20) and that has the light passing hole.

4. The camera module according to any one of claims 1 to 3, wherein a diameter of the light passing hole of the motor circuit board is greater than a diameter of the camera lens.

5. The camera module according to any one of claims 2 and 3 , wherein there is an accommodating space between the motor circuit board and the motor, and the accommodating space is used to accommodate an electronic device on the motor circuit board.

6. The camera module according to any one of claims 2 and 3 , wherein the motor is a motor driven by a SMA, and the motor driven by the SMA comprises a movable part (41), a fastener (43), a camera lens support (42), and an SMA wire (44), wherein one end of the camera lens support (42) is fastened to the fastener (43), and the other end thereof is configured to support the movable part (41); a light passing hole is provided on the movable part (41), and the movable part (41) is configured to mount the camera lens; one end of the SMA wire (44) is connected to the fastener (43), and the other end of the SMA wire (44) is connected to the movable part (41); and the fastener (43) comprises a base (461) and a positioning component (462), the base (461) has a light passing hole, the base (461) is located on the image side of the camera lens assembly, one end of the positioning component (462) is fastened to the base (461), and the other end thereof is fastened to the motor circuit board.

7. A camera, wherein the camera comprises a camera body, a main board, a first mounting part, and a camera module; the first mounting part is disposed on the camera body, and is configured to detachably assemble the camera module; and the camera module is electrically connected to the main board, and the camera module is the camera module according to any one of claims 1 to 6.

8. A mobile terminal, comprising a housing, a main board, and a camera module, wherein the main board is disposed in the housing, a camera of the camera module is disposed at a camera hole of the housing, the camera module is electrically connected to the main board, and the camera module is the camera module according to any one of claims 1 to 6.

## Patentansprüche

1. Kameramodul für Motoren, die durch eine Technik für Formgedächtnislegierung (shape memory alloy - SMA) angetrieben werden, umfassend:
eine Kameralinsenbaugruppe, eine Motorplatine (30) und einen Bildsensor (60), wobei die Motorplatine (30) und die Kameralinsenbaugruppe jeweils eine Lichtdurchlassöffnung aufweisen, die Kameralinsenbaugruppe sich zwischen dem Bildsensor (60) und der Motorplatine (30) befindet, eine lichtempfindliche Fläche des Bildsensors (60) sich auf einer Bildseite der Kameralinsenbaugruppe befindet und die Motorplatine (30) sich auf einer Objektseite der Kameralinsenbaugruppe befindet.

2. Kameramodul nach Anspruch 1, wobei die Kameralinsenbaugruppe eine Kameralinse (10) und einen Motor (40) umfasst und der Motor (40) ein bewegliches Teil (41), ein Befestigungselement (43), einen Kameralinsenträger (42) und einen Aktor (44) umfasst; ein Ende des Kameralinsenträgers (10) an dem Befestigungselement (43) befestigt ist und sein anderes Ende dazu konfiguriert ist, das bewegliche Teil (41) zu tragen; eine Lichtdurchlassöffnung an dem beweglichen Teil (41) bereitgestellt ist und das bewegliche Teil (41) dazu konfiguriert ist, die Kameralinse (10) darin einzusetzen; ein Ende des Aktors (44) mit dem Befestigungselement (43) verbunden ist, das andere Ende des Aktors (44) mit dem beweglichen Teil (41) verbunden ist und der Aktor (44) das bewegliche Teil (41) antreibt, wenn er durch ein Signal angesteuert wird; und das Befestigungselement (43) eine Basis (461) und eine Positionierungskomponente (462) umfasst, die Basis (461) eine Lichtdurchlassöffnung aufweist, die Basis (461) sich auf der Bildseite der Kameralinsenbaugruppe befindet, ein Ende der Positionierungskomponente (462) an der Basis (461) befestigt ist und sein anderes Ende an der Motorplatine befestigt ist.

3. Kameramodul nach Anspruch 1, wobei das Kameramodul ferner ein Gehäuse (20) umfasst und die Kameralinsenbaugruppe eine Kameralinse (10) und einen Motor (40) umfasst, wobei eine Lichtdurchlassöffnung an einer Fläche des Gehäuses (20), die der Kameralinse (10) entspricht, bereitgestellt ist; ein Ende eines Kameralinsenträgers (42) an einem Befestigungselement (43) befestigt ist und sein anderes Ende dazu konfiguriert ist, ein bewegliches Teil (41) zu tragen; eine Lichtdurchlassöffnung an dem beweglichen Teil (41) bereitgestellt ist und das bewegliche Teil (41) dazu konfiguriert ist, die Kameralinse (10) darin einzusetzen; ein Ende eines Aktors (44) mit dem Befestigungselement (43) verbunden ist und das andere Ende des Aktors (44) das bewegliche Teil antreibt, wenn der Aktor (44) durch ein Signal angesteuert wird; und die Motorplatine sich auf einer Seite des Gehäuses (20) befindet, die die Lichtdurchlassöffnung aufweist.

4. Kameramodul nach einem der Ansprüche 1 bis 3, wobei ein Durchmesser der Lichtdurchlassöffnung der Motorplatine größer ist als ein Durchmesser der Kameralinse.

5. Kameramodul nach einem der Ansprüche 2 und 3, wobei zwischen der Motorplatine und dem Motor ein Aufnahmeraum vorhanden ist und der Aufnahmeraum verwendet wird, um eine elektronische Vorrichtung an der Motorplatine aufzunehmen.

6. Kameramodul nach einem der Ansprüche 2 und 3, wobei der Motor ein Motor ist der durch eine SMA angetrieben wird und der durch die SMA angetriebene Motor ein bewegliches Teil (41), ein Befestigungselement (43), einen Kameralinsenträger (42) und einen SMA-Draht (44) umfasst, wobei ein Ende des Kameralinsenträgers (42) an dem Befestigungselement (43) befestigt ist und sein anderes Ende dazu konfiguriert ist, das bewegliche Teil (41) zu tragen; eine Lichtdurchlassöffnung an dem beweglichen Teil (41) bereitgestellt ist und das bewegliche Teil (41) dazu konfiguriert ist, die Kameralinse darin einzusetzen; ein Ende des SMA-Drahts (44) mit dem Befestigungselement (43) verbunden ist und das andere Ende des SMA-Drahts (44) mit dem beweglichen Teil (41) verbunden ist; und das Befestigungselement (43) eine Basis (461) und eine Positionierungskomponente (462) umfasst, die Basis (461) eine Lichtdurchlassöffnung aufweist, die Basis (461) sich auf der Bildseite der Kameralinsenbaugruppe befindet, ein Ende der Positionierungskomponente (462) an der Basis (461) befestigt ist und sein anderes Ende an der Motorplatine befestigt ist.

7. Kamera, wobei die Kamera ein Kameragehäuse, eine Hauptplatine, ein erstes Anbringungsteil und ein Kameramodul umfasst; das erste Anbringungsteil an dem Kameragehäuse angeordnet und dazu konfiguriert ist, das Kameramodul abnehmbar daran zu montieren; und das Kameramodul elektrisch mit der Hauptplatine verbunden ist und das Kameramodul das Kameramodul nach einem der Ansprüche 1 bis 6 ist.

8. Mobiles Endgerät, umfassend ein Gehäuse, eine Hauptplatine und ein Kameramodul, wobei die Hauptplatine in dem Gehäuse angeordnet ist, eine Kamera des Kameramoduls an einer Kameraöffnung des Gehäuses angeordnet ist, das Kameramodul elektrisch mit der Hauptplatine verbunden ist und das Kameramodul das Kameramodul nach einem der Ansprüche 1 bis 6 ist.

## Revendications

1. Module de caméra pour moteurs entraînés par une technologie d'alliage à mémoire de forme, SMA, comprenant :
un ensemble objectif de caméra, une carte de circuit imprimé de moteur (30) et un capteur d'image (60), dans lequel la carte de circuit imprimé de moteur (30) et l'ensemble objectif de caméra ont chacun un trou de passage de lumière, l'ensemble objectif de caméra est situé entre le capteur d'image (60) et la carte de circuit imprimé de moteur (30), une surface sensible à la lumière du capteur d'image (60) est située sur un côté image de l'ensemble objectif de caméra, et la carte de circuit imprimé de moteur (30) est située sur un côté objet de l'ensemble objectif de caméra.

2. Module de caméra selon la revendication 1, dans lequel l'ensemble objectif de caméra comprend un objectif de caméra (10) et un moteur (40), et le moteur (40) comprend une partie mobile (41), un élément de fixation (43), un support d'objectif de caméra (42) et un actionneur (44) ; une extrémité du support d'objectif de caméra (10) est fixée à l'élément de fixation (43), et l'autre extrémité de celui-ci est configurée pour supporter la partie mobile (41) ; un trou de passage de lumière est prévu sur la partie mobile (41), et la partie mobile (41) est configurée pour monter l'objectif de caméra (10) ; une extrémité de l'actionneur (44) est reliée à l'élément de fixation (43), l'autre extrémité de l'actionneur (44) est reliée à la partie mobile (41), et l'actionneur (44) entraîne la partie mobile (41) lorsqu'il est entraîné par un signal ; et l'élément de fixation (43) comprend une base (461) et un composant de positionnement (462), la base (461) a un trou de passage de lumière, la base (461) est située sur le côté image de l'ensemble objectif de caméra, une extrémité du composant de positionnement (462) est fixée à la base (461), et l'autre extrémité de celui-ci est fixée à la carte de circuit imprimé de moteur.

3. Module de caméra selon la revendication 1, dans lequel le module de caméra comprend également un boîtier (20), et l'ensemble objectif de caméra comprend un objectif de caméra (10) et un moteur (40), dans lequel un trou de passage de lumière est prévu sur une surface qui est du boîtier (20) et qui correspond à l'objectif de caméra (10) ; une extrémité d'un support d'objectif de caméra (42) est fixée à un élément de fixation (43), et l'autre extrémité de celui-ci est configurée pour supporter une partie mobile (41) ; un trou de passage de lumière est prévu sur la partie mobile (41), et la partie mobile (41) est configurée pour monter l'objectif de caméra (10) ; une extrémité d'un actionneur (44) est reliée à l'élément de fixation (43), et l'autre extrémité de l'actionneur (44) entraîne la partie mobile lorsque l'actionneur (44) est entraîné par un signal ; et la carte de circuit imprimé de moteur est située sur un côté qui est du boîtier (20) et qui a le trou de passage de lumière.

4. Module de caméra selon l'une quelconque des revendications 1 à 3, dans lequel un diamètre du trou de passage de lumière de la carte de circuit imprimé de moteur est supérieur à un diamètre de l'objectif de caméra.

5. Module de caméra selon l'une quelconque des revendications 2 et 3, dans lequel il existe un espace de logement entre la carte de circuit imprimé de moteur et le moteur, et l'espace de logement est utilisé pour loger un dispositif électronique sur la carte de circuit imprimé de moteur.

6. Module de caméra selon l'une quelconque des revendications 2 et 3, dans lequel le moteur est un moteur entraîné par un SMA, et le moteur entraîné par le SMA comprend une partie mobile (41), un élément de fixation (43), un support d'objectif de caméra (42) et un câble SMA (44), dans lequel une extrémité du support d'objectif de caméra (42) est fixée à l'élément de fixation (43), et l'autre extrémité de celui-ci est configurée pour supporter la partie mobile (41) ; un trou de passage de lumière est prévu sur la partie mobile (41), et la partie mobile (41) est configurée pour monter l'objectif de caméra ; une extrémité du câble SMA (44) est reliée à l'élément de fixation (43), et l'autre extrémité du câble SMA (44) est reliée à la partie mobile (41) ; et l'élément de fixation (43) comprend une base (461) et un composant de positionnement (462), la base (461) a un trou de passage de lumière, la base (461) est située sur le coté image de l'ensemble objectif de caméra, une extrémité du composant de positionnement (462) est fixée à la base (461), et l'autre extrémité de celui-ci est fixée à la carte de circuit imprimé de moteur.

7. Caméra, dans laquelle la caméra comprend un corps de caméra, une carte principale, une première partie de montage et un module de caméra ; la première partie de montage est disposée sur le corps de caméra et est configurée pour assembler de manière amovible le module de caméra ; et le module de caméra est relié électriquement à la carte principale, et le module de caméra est le module de caméra selon l'une quelconque des revendications 1 à 6.

8. Terminal mobile, comprenant un boîtier, une carte principale et un module de caméra, dans lequel la carte principale est disposée dans le boîtier, une caméra du module de caméra est disposée au niveau d'un trou de caméra du boîtier, le module de caméra est relié électriquement à la carte principale, et le module de caméra est le module de caméra selon l'une quelconque des revendications 1 à 6.
